# EUROPÄISCHE PATENTSCHRIFT

(11) **EP 0 571 653 B1**
(45) Veröffentlichungstag und Bekanntmachung des Hinweises auf die Patenterteilung: **06.12.1995**
(21) Anmeldenummer: 92109081.7
(22) Anmeldetag: 29.05.1992
(51) Int. Cl.: A23L 1/304, A23L 2/42

(54) **Mit Mineralstoffen und Vitaminen angereicherte Fruchtgetränke und Frucht-Gemüsegetränke**
Fruit and fruit-vegetable juices enriched with minerals and vitamins
Jus de fruit et jus de fruits et légumes mélangés enrichis de substances minérales et de vitamines

(43) Veröffentlichungstag der Anmeldung: 01.12.1993
(73) Patentinhaber: ECKES AG, D-55268 Nieder-Olm (DE)
(72) Erfinder: Wiesenberger, Alfred, W-6200 Wiesbaden- Sonnenberg (DE); Kolb, Erich, Dr., W-6501 Nieder-Olm (DE); Simson, Ingrid, W-6500 Mainz 1 (DE)
(74) Vertreter: Luderschmidt, Schüler & Partner GbR

(56) Entgegenhaltungen:
- EP-A- 0 141 250
- EP-A- 0 397 232
- DE-C- 4 111 040
- US-A- 4 737 367
- US-A- 4 738 856

## Beschreibung

Die vorliegende Erfindung betrifft mit Mineralstoffen angereicherte Fruchtgetränke und Frucht-Gemüsegetränke.

Die Anreicherung von Lebensmitteln mit Vitaminen und Mineralstoffen ist bereits seit Jahren bekannt und wird zur ernährungsphysiologischen Aufwertung von Produkten durchgeführt. Frucht- und Gemüsegetränke sind zu diesem Zweck deshalb gut geeignet, weil sie bereits von Natur aus über einen hohen Gehalt an einzelnen Vitaminen und Mineralstoffen verfügen und aus diesem Grund für eine gesunde Ernährung von besonderem Interesse sind. Seit vielen Jahren gibt es daher Fruchtsäfte, Fruchtnektare, Fruchtsaftgetränke und Gemüsegetränke die mit bis zu 12 Vitaminen und Provitaminen angereichert sind. Aus der US-PS 4,737,367 ist ein Fruchtgetränk bekannt, dem Vitamine, insbesondere B₁, Pantothensäure, Niacin und Folsäure in Mengen zugesetzt sind, die 25 % bis 200 % des täglichen Bedarfs dieser Vitamine ausmachen. Es handelt sich hier um Fruchtgetränke aus Citrusfrüchten.

Mit einzelnen Mineralstoffen angereicherte Getränke sind ebenfalls bekannt. So sind bereits seit vielen Jahren Fruchtgetränke mit Zusätzen von Eisensalzen, Calcium- oder Magnesiumsalzen auf dem Markt erhältlich. So wird in der EP-OS 0,141,250 ein Getränk beschrieben, welches in einem Liter mehr als den halben Tagesbedarf an Magnesium enthält, wobei der Calciumgehalt bewußt niedrig gehalten ist. Aus der US-PS 4,737,375 sind Getränke mit Calciumzusätzen von fast dem zweifachen des Tagesbedarfs pro Liter bekannt, ebenso aus der EP-A- 0,397 232, wo neben hohem Vitamin C-Zusatz und erhöhtem Calciumgehalt zusätzlich noch ein hoher Gehalt an Eisen vorliegt, oder in der US-PS 4,738,856, in welcher Getränke mit einem Calciumgehalt bis zur Hälfte des Tagesbedarfs pro Liter neben relativ hohem Magnesiumgehalt beschrieben sind.

Es ist bekannt, daß bei Vorliegen relativ hoher Konzentrationen an Mineralstoffen und gegebenenfalls Vitaminen Beeinträchtigungen des Aromas oder Geschmacks nicht zu vermeiden sind. Im Falle der US-PS 4,737,375 und der EP-A-0 397 232 wird versucht, durch Zusatz von Aromen, insbesondere aus Citrusfrüchten, und von Süßstoffen das Geschmacksempfinden zu verbessern. Ein für Frucht- oder Gemüsegetränke nach sensorischen Gesichtspunkten ausgewogenes Geschmacksprofil kann allein durch den Zusatz von Aromen aber nicht erreicht werden.

Der Erfindung liegt daher die Aufgabe zugrunde, Fruchtgetränke und Frucht-Gemüsegetränke mit erhöhtem Zusatz von essentiellen Mineralstoffen zur Verfügung zu stellen, wobei das sonst durch den ernährungsphysiologisch sinnvollen Zusatz der Mineralstoffe hervorgerufene negative Geschmacksempfinden maskiert ist und der Gesamteindruck den sensorischen Anforderungen an ein harmonisches Geschmacksprofil solcher Getränke entspricht.

Überraschenderweise wurde gefunden, daß durch Zusatz von Fruchtsaft und/oder Fruchtmark von aromaintensiven, tropischen Früchten, insbesondere aus der Familie der Anacardiaceae, Annonaceae, Myrtaceae, Passifloraceae, Rosaceae und/oder Solanaceae ein solch harmonisches, nach sensorischen Gesichtspunkten augewogenes Getränk erhalten werden kann. Das Getränk soll dabei in einem Liter mindestens ein Drittel, bevorzugt mindestens zwei Drittel bis maximal das Dreifache des jeweiligen Tagesbedarfs an essentiellen Mineralstoffen aus der Gruppe Ca, K, Mg und Fe jeweils einzeln oder in Kombination enthalten. Aus der EP-A-0 141 250 ist zu entnehmen, daß im Falle des Magnesiums ein negatives Geschmacksempfinden etwa ab einer Konzentration von 200 mg/l (ca. zwei Drittel des täglichen Bedarfs) zu erwarten ist. Die vorliegende Erfindung kommt insbesondere dann zum Tragen, wenn ein Mineralstoff in höheren Konzentrationen, etwa in mehr als dem einfachen des Tagesbedarfs pro Liter bei nur einem Mineralstoff oder bevorzugt, wenn zwei oder mehrere Mineralstoffe nebeneinander in relativ hohen Konzentrationen, die dann aber auch unterhalb des jeweiligen Tagesbedarfs liegen können, vorliegen.

Die Selektion der für die Maskierung geeigneten Fruchtarten erfolgt durch sensorische Analyse. Hierbei werden in einem ersten Schritt durch mindestens 5, vorzugsweise 10, geschulte Sensoriker (gemäß ISO-Norm 6658) mittels Aromaprofilanalysen nach ISO-Norm 6564 aus den oben angegebenen Familien die in Bezug auf Aromaintensität und Reinheit besten Partien ermittelt. Alle Fruchtsorten, die die jeweils festgelegten Punktzahlen beziehungsweise Klassifizierungen erreichen, werden einzeln oder in Kombination in den Getränken der vorliegenden Erfindung eingesetzt, wobei die so erhaltenen Getränke mittels einer Rang- oder Varianzanalyse mit den jeweiligen Produkten ohne Zusatz von Fruchtarten, die nach dem oben beschriebenen Verfahren ausgewählt wurden, in Beziehung gesetzt werden. Für die Ausbildung der Sensoriker sind ISO-Normen erstellt worden, ebenso für Prüfraum, Prüfgut und anzuwendende Prüfverfahren, so daß auch eine größtmögliche Reproduzierbarkeit gewährleistet ist. Die Durchführung eines solchen Rangordnungstests erfolgt gemäß der dafür erstellten ISO-Norm 8587.

Die gewichtsprozentuale Menge der zugesetzten Fruchtsäfte und/oder Fruchtmarks aus den oben genannten Familien ist entscheidend abhängig von ihrer Qualität und Intensität sowie von Art und Höhe des Mineralstoffzusatzes. Der für eine definierte Mineralstoffkombination ermittelte Gehalt an zuzusetzendem Fruchtsaft und/oder Fruchtmark ist zur Maskierung der negativen sensorischen Beeinträchtigung auch dann geeignet, wenn gleichzeitig eine Anreicherung mit einem oder mehreren Vitaminen und/oder Provitaminen vorzugsweise mindestens 3, in ernährungsphysiologisch relevanten Mengen vorliegt.

Obwohl im Einzelfall, bei Vorliegen nur eines einzelnen Mineralstoffes in erhöhter Konzentration, insbesondere unterhalb des Tagesbedarfs, sich ein negatives Geschmacksempfinden noch nicht als ausgesprochen unangenehm bemerkbar machen muß, sollte der Zusatz eines solchen geschmacksmaskierenden Fruchtsafts und/oder Fruchtmarks nicht unter 2 Gew.-%, bevorzugt nicht unter 5 Gew.-% fallen, um damit dennoch einen typischen Fruchtgeschmack beizubehalten. Dies ist auch besonders dann von Vorteil, wenn man eine Produktpalette mit abgestuften Mineralstoffzusätzen, jedoch gleichartig ausgeprägtem Geschmacksprofil anbieten möchte. Bevorzugt sollte der Mineralstoffzusatz aus mindestens 2 Vertretern der Gruppe Ca, K, Mg, Fe bestehen.

Der Begriff Getränke bezieht sich auf ein zum unmittelbaren Konsum geeignetes Produkt oder ein Konzentrat, das unter Zusatz von Wasser auf Trinkstärke verdünnt wird. Für die Herstellung eines Getränkes gemäß der vorliegenden Erfindung wird vorzugsweise aufbereitetes Wasser verwendet, wie es in der Fruchtsaftindustrie üblicherweise eingesetzt wird. Anstelle von Wasser kann auch carbonisiertes Wasser, Mineral-, Quell- und/oder Tafelwasser zur Verdünnung auf Trinkstärke verwendet werden.

Der Zusatz der Mineralstoffe erfolgt in Form von Salzen nach dem Stand der Technik. Insbesondere können auch aus natürlichen Nahrungsmitteln gewonnene Mineralstoffkonzentrate, in denen die ernährungsphysiologisch relevanten Mineralstoffe in Kombination vorliegen, eingesetzt werden. Für die Mineralstoffanreicherung besonders geeignet sind aus Milch bzw. Süß- oder Sauermolke gewonnene sogenannte "Milchmineralien". Die typische Zusammensetzung eines derartigen "Milchmineralienkonzentrates" beträgt pro 100 g beispielsweise ca. 19 g Calcium, 1,5 g Kalium, 1,0 Natrium, 0,5 Magnesium, 30 g Phosphat, 2,0 g Chlorid sowie an Spurenelementen pro 100 g: Zink ca. 40 mg, Kupfer maximal 0,4 mg, Eisen ca. 1,5 mg, Mangan ca. 0,3 mg, Molybdän ca. 0,3 mg, Selen max. 0,005 mg und Jod max. 0,01 mg.

Andere für die Anreicherung mit Mineralstoffen geeignete natürliche Quellen sind z.B. Solen. Der Gehalt an den für die Erfindung relevanten Mineralstoffen beträgt bei einer Calciumsole beispielsweise ca. 5300 mg/l Calcium und ca. 630 mg/l Magnesium. Entzuckerte, enfärbte Melasse, z.B. Zuckerrübenmelasse mit Gehalten an den für die vorliegende Erfindung relevanten Mineralstoffen von ca. 6400 mg/100 g Kalium, ca. 186 mg/100 g Calcium und ca. 100 mg/100 g Magnesium sind ebenfalls, vorzugsweise in Mischung mit den vorgenannten Mineralstoffquellen zum Einsatz geeignet.

Werden die Mineralstoffe einzeln oder in definierten Mischungen zugesetzt, erfolgt die Zugabe in Form von Salzen. Der Zusatz von Kalium erfolgt z.B. als Kaliumchlorid oder auch als Salz der L(+)-Milchsäure, Zitronensaure, Kohlensäure, Gluconsäure oder Glycerophosphorsäure. Als Verbindungen des Calciums sind insbesondere die mit L(+)-Milchsäure und Gluconsäure neben Carbonat, Citrat, Orthophosphat und Oxid geeignet. Magnesium wird vorzugsweise in Form von Salzen der L(+)-Milchsäure und Gluconsäure neben Carbonaten, Citraten oder Glycerophosphaten zugegeben. Eisensalze sollten vorzugsweise in Form von Verbindungen des zweiwertigen Eisens zugesetzt werden, z.B. als Fe-(II)-gluconat, Fe-(II)-ascorbat, Fe-(II)-L(+)-lactat, Fe-(II)-orthophosphat, Fe-(II)-fumarat oder Fe-(II)-sulfat. Im allgemeinen werden von dem über die Nahrung aufgenommenen Eisen nur 3-12 % resorbiert, wobei die mittlere Ausnutzungsquote ca. 10 % beträgt. Zahlreiche in der einschlägigen Fachliteratur beschriebene Untersuchungen, z.B. auch in der EP-A-0 397 232, haben jedoch gezeigt, daß die Eisenresorption, insbesondere auch in Gegenwart anderer Mineralstoffe wie z.B. von Calciumsalzen, durch gleichzeitige Gaben von Vitamin C erheblich verbessert werden kann. Diese Gaben können durch Zusatz von reinem Vitamin C erfolgen oder aber auch in Form besonders Vitamin C-haltiger Fruchtsäfte oder Fruchtmarks. Besonders geeignet hierfür sind beispielsweise der Saft oder das Mark der Acerolakirsche oder der in Australien beheimateten Kakadupflaume Terminalia ferdinandiana.

Neben Vitamin C, dessen Zusatz außer mit dem Saft und/oder Mark Vitamin C-reicher Früchte auch in reiner Form erfolgen kann, ist eine Anreicherung mit weiteren Vitaminen in ernährungsphysiologisch relevanten Mengen für die vorliegende Erfindung ebenfalls erwünscht. Für die Anreicherung in Frage kommen aus der Gruppe der wasserlöslichen Vitamine die Vitamine der B-Gruppe wie Thiamin (Vitamin B 1), Riboflavin (Vitamin B 2), Pyridoxin (Vitamin B 6), Niacin, Folsäure, Pantothensäure, Biotin, und/oder Cobalamin (Vitamin B 12). Aus der Gruppe der fettlöslichen Vitamine kann das Vitamin E sowie das Provitamin A nach im Stand der Technik bekannten Methoden erfolgen.

Ernährungsphysiologisch relevante Mengen im Sinne der Erfindung sind diejenigen Mengen an Mineralstoffen und Vitaminen, die geeignet sind, einen beträchtlichen Teil des täglichen Bedarfs an diesen Mineralstoffen und Vitaminen zu decken. Die zugrundegelegten Mengen entsprechen den von der "Deutschen Gesellschaft für Ernährung" veröffentlichten Richtwerten (Umschau Verlag: "Empfehlungen für die Nährstoffzufuhr, 5. Überarbeitung 1991"), von denen angenommen wird, daß sie vor ernährungsbedingten Gesundheitsschäden schützen. Den Prozentangaben der empfohlenen täglichen Zufuhr liegt der durchschnittliche Bedarf eines Erwachsenen zugrunde.

Zur Erzielung eines harmonischen Süße:Säure-Verhältnisses können dem Getränk zusätzlich noch Süßungsmittel beigegeben werden. Als Süßungsmittel kommen z.B. Zucker (Saccharose), Invertzuckersirup, Fruchtzucker, Traubenzucker und/oder Zuckeralkohole sowohl einzeln als auch in Mischung in Frage. Für die vorliegende Erfindung geeignet ist auch die Süßung mit aus Früchten hergestellten süßenden Extrakten und Konzentraten. Die vorgenannten Süßungsmittel können sowohl einzeln als auch in Mischung untereinander oder in Mischung mit künstlichen Süßstoffen eingesetzt werden. Als künstliche Süßstoffe geeignet sind z.B. Saccharin, Cyclamat, Aspartame, Acesulfam K oder Neohesperidindihydrochalkon. Typische Zusätze von Süßungsmitteln liegen im Bereich von 1-15 Gew.-%, wobei der Gehalt an künstlichen Süßstoffen, bezogen auf das trinkfertige Getränk, vorzugsweise 0,001-0,05 Gew.-% beträgt.

Überraschenderweise hat sich gezeigt, daß auch das negative Geschmacksprofil von mit höherem Mineralstoffgehalt angereicherten Getränken mit Zusätzen von Gemüsesäften und/oder Gemüsemark sich durch Zusatz von Säften und/oder Mark aus solchen tropischen Früchten maskieren läßt. Dies ist insbesondere der Fall bei Zusatz von Saft und/oder Mark von Karotten, Paprika, Gurken, Honigmelonen und Fenchel. Die vorgenannten Gemüsesäfte und das vorgenannte Gemüsemark können auch in konzentrierter Form zum Einsatz kommen.

Die Fruchtsäfte und/oder das Fruchtmark, die zur Maskierung des negativen Geschmacksprofils zugesetzt werden, werden vorzugsweise ohne weitere Konzentrierung dem mit Mineralstoff angereicherten Getränk zugefügt. Typische Vertreter aus der Familie der Anacardiaceae stellen z.B. die Steinfrüchte des immergrünen Mangobaumes dar, mit den überaus zahlreichen, in Ostasien, Südafrika, Kenia, Gambia, Israel, Florida, Zentralamerika, Australien und Südamerika angebauten Varietäten. Desweiteren können aus dieser Familie die Balsampflaume (Spondias dulcis) und die Gandaria (Bouea macrophylla) vorteilhaft eingesetzt werden. Aus der Familie der Annonaceae sind die Annonen, sogenannte Sammelfrüchte immergrüner Bäume verschiedener Arten der Gattung Annona geeignet. Besonders geeignet für die vorliegende Erfindung sind die Früchte des Flaschenbaumes Annona cherimola, der in den hochgelegenen Tälern (1600-2200 m) der Anden in Peru und Ecuador beheimatet ist, aber auch die Schuppenannone (Annona squamosa), die Stachelannone (Annona muricata) oder die Netzannone (Annona reticulata.) Ebenso tauglich sind die sogenannten "Anden-Brombeeren", die zu der Familie der Rosacea gehörenden Früchte des in Kolumbien und Peru in Höhen zwischen 1800 und 2400 m gedeihenden Strauches Rubus glaucus. Weitere typische Vertreter der Rosaceae sind die Mora, die Boysenbeere, die Loganbeere (Rubus loganobaccus), die Loquat (Eribotrya japonica) oder die Japanische Pflaume (Prunus salicina). Aus der Familie der Solanaceae erwies sich die sogenannte "Quito-Orange" Lulo aus den subtropischen, feuchten Höhenlagen in Ecuador, Kolumbien, Peru und Mittelamerika als am besten geeignet. Aus der Familie der Passifloraceae kommen neben der Passionsfrucht, vorzugsweise Passiflora edulis Sims. u.a. die bananenfrüchtige Passiflora molissima in Frage, die in den kühleren Höhenlagen der kolumbianischen Anden sowie in Peru und Venezuela beheimatet ist. Die zur Familie der Myrtaceae gehörende rundliche oder birnenförmige Frucht Guayaba des u.a. in Südafrika und Südamerika angebauten Guavenstrauches ist wegen ihres intensiven Aromas ebenfalls bestens geeignet, ebenso wie die Coronilla (Psidium friedrichstalanium), die Feijoa (Acca sellowiana), die Jaboticaba (Myrciaria cauliflora), die Jambolanpflaume (Syzygium cumini) oder die Surinamkirsche (Eugenia uniflora).

Die Erfindung wird im folgenden anhand typischer Vertreter der erfindungsgemäßen Fruchtgetränke und Frucht- und Gemüsegetränke näher erläutert:

### Beispiel 1:

### Selektion der Fruchtsaft- und Fruchtmarkqualitäten mittels Aromaprofilanalyse nach ISO-Norm 6564

8 geschulte Verkoster, einschließlich des Leiters, legten anhand von Referenzmustern gemeinsam die für die Produktqualität und den speziellen Anwendungszweck maßgebenden Merkmale Geruch und Geschmack der für die Maskierung in Betracht gezogenen Fruchtsäfte und Fruchtmarks nach folgendem Bewertungsschema fest:

| Punkte | Geruch | Geschmack |
|---|---|---|
| 9 | besonders aromatisch, rein | besonders fruchtig, rein |
| 8 | gut aromatisch, rein | gut fruchtig, rein |
| 7 | aromatisch, rein | fruchtig, rein |
| 6 | schwach aromatisch, rein | schwach fruchtig, rein |
| 5 | aromatisch mit geringfügigen Veränderungen | fruchtig mit geringfügen Veränderungen |
| 4 | schwach aromatisch mit geringfügigen Veränderungen | schwach fruchtig mit geringfügigen Veränderungen |
| 3 | deutlich verändert | deutlich verändert |
| 2 | stark verändert | stark verändert |
| 1 | fremdartig | fremdartig |

Zur Maskierung der durch den Mineralstoffzusatz auftretenden sensorischen Beeinträchtigungen sind nur solche Fruchtsäfte und Fruchtmarks geeignet, die für Geruch und Geschmack jeweils mindestens 7 Punkte erreichen.

### Beispiel 2:

### Rezeptur I (Code-Nummer 8349)

Getränk mit 60 % Fruchtgehalt bestehend aus
20 % Orangensaft
10 % Mandarinensaft
14 % Zitronensaft
8 % Apfelsaft
5 % Curubasaft (Geruch 8 Punkte, Geschmack 7 Punkte)
3 % Stachelannonenmark (Geruch 8 Punkte, Geschmack 8 Punkte)
0,98 % Calcium-L(+)-lactat
0,47 % Trikaliumcitrat
0,024 % Eisen-(II)-gluconat
0,11 % Vitamin C
0,018 % Vitamin E
0,009 % Provitamin A
0,013 % Aspartame
0,013 % Acesulfam K
10 % Apfelextrakt
ad 100 % Wasser
Das nach Rezeptur I hergestellte Getränk wurde mit 4 weiteren Getränken einem Rangfolgetest unterzogen, wobei die nachfolgend beschriebenen Rezepturmodifikationen vorgenommen wurden. (Im Fall der Probe mit der Code-Nummer 7714 mußte zum Erreichen des gleichen Süße-Säure-Empfindens der Zitronensaftanteil reduziert werden, da keine Mineralsalze zugesetzt waren und damit die Pufferwirkung, insbesondere des Trikaliumcitrates fehlte.)

### Variante I/A (Code-Nummer 7714)

- ohne Zusatz von Curubasaft und Stachelannonenmark
- Apfelsaftanteil von 8 auf 22 % erhöht, Zitronensaftanteil von 14 auf 8 % reduziert
- ohne Zusatz der Mineralsalze Calcium-(+)-lactat, Trikaliumcitrat und Eisen-(II)-gluconat, alle übrigen Bestandteile blieben unverändert.

### Variante I/B (Code-Nummer 3247)

- ohne Zusatz von Curubasaft und Stachelannonenmark
- Apfelsaftanteil von 8 auf 16 % erhöht, alle übrigen Bestandteile blieben unverändert.

### Variante I/C (Code-Nummer 7581)

- mit Zusatz von 2 % Stachelannonenmark, ohne Zusatz von Curubasaft
- Apfelsaftanteil von 8 auf 14 % erhöht, alle übrigen Bestandteile blieben unverändert

### Variante I/D (Code-Nummer 6402)

- mit Zusatz von jeweils 2 % Curuba- und Stachelannonenmark
- Apfelsaftanteil von 8 auf 12 % erhöht, alle übrigen Bestandteile blieben unverändert

Die codierten Proben wurden gemäß ISO-NORM 8587 im Rangfolgetest mit folgendem Ergebnis verkostet:

| Code-Nummer | Rangsumme |
|---|---|
| 8349 | 14 |
| 7714 | 12 |
| 3247 | 37 |
| 7581 | 32 |
| 6402 | 25 |

Beträgt wie im vorliegenden Fall die Zahl der Proben 5 und die der Verkoster 8 so unterscheiden sich gemäß ISO-NORM 8587 zwei Muster mit einem Signifikanzniveau von 1 %, wenn der absolute Unterschied ihrer Rangsummen > 16,29 ist. Danach besteht kein signifikanter Unterschied zwischen den Proben mit den Code-Nummern 8349 und 7714, d.h. ein Zusatz von 5 % Curubasaft und 3 % Stachelannonenmark ist geeignet, den Zusatz von drei Mineralstoffen in der Höhe von 200 % (Calcium), 90 % (Kalium) und 200 % (Eisen) des Tagesbedarfs pro Liter Getränk zu maskieren.

### Beispiel 3:

### Rezeptur II (Code-Nummer 2485)

Getränk mit 50 % Fruchtgehalt bestehend aus
30 % Orangensaft
12 % Limonensaft
6 % Cherimoyamark (Geruch 8 Punkte, Geschmack 8 Punkte)
2 % Acerolamark
0,8 % Milchmineralien (z.B. CAPOLAC)
0,012 % Eisen-(II)-gluconat
0,015 % Vitamin E
0,0014 % Vitamin B1
8,5 % Invertzuckersirup (72,7 % Trockensubstanz)
ad 100 % Wasser

### Variante II/A (Code-Nummer 1768)

- ohne Zusatz von Cherimoyamark
- Orangensaftanteil um 6% erhöht
- ohne Zusatz der Milchmineralien und Eisen-(II)-gluconat, alle übrigen Bestandteile analog Getränk II/A

### Variante II/B (Code-Nummer 3629)

- ohne Zusatz von Cherimoyamark
- Orangensaftanteil um 6 % erhöht, alle übrigen Bestandteile blieben unverändert

Das Ergebnis im Rangfolgetest mit 8 Verkostern gemäß ISO-NORM 8587 war wie folgt

| Code-Nummer | Rangsumme |
|---|---|
| 2485 | 13 |
| 1768 | 11 |
| 3629 | 24 |

Das Ergebnis zeigte, daß im vorliegenden Fall der Zusatz von 6% Cherimoyamark (Code-Nummer 2485) eine Maskierung des Mineralstoffzusatzes bewirkte, so daß in der Rangfolge kein signifikanter Unterschied zu der Probe ohne Mineralstoff- und Cherimoyamarkzusatz bestand (Code-Nummer 1768) Gegenüber der mineralstoffangereicherten Probe ohne Cherimoyamarkzusatz (Code-Nummer 3629) war dagegen der Unterschied signifikant.

### Beispiel 4:

### Rezeptur III (Code-Nr. 7546)

Getränk mit 50 % Frucht- und Gemüsegehalt bestehend aus
25 % Ananassaft
10 % Zitronensaft
6 % Feijoamark (Geruch 8 Punkte, Geschmack 8 Punkte)
5 % Honigmelonensaft
2 % Bananenmark
2 % Chayotenmark (Geruch 8 Punkte, Geschmack 7 Punkte
0,75 % Calcium-(L+)-lactat
0,78 % Magnesiumgluconat
0,024 % Eisen-(II)-gluconat
0,10 % Vitaminmischung bestehend aus:
0,63 % Vitamin B₁
0,76 % Vitamin B₂
8,04 % Niacin
0,81 % Vitamin B₆
0,14 % Folsäure
5,80 % Pantothensäure
83,80 % Vitamin C
7,50 % Fructose
ad 100 % Wasser

### Variante III/A (Code-Nummer 2309)

- ohne Zusatz von Feijoa- und Chayotenmark, Ananassaftanteil von 25% auf 33 % erhöht
- ohne Zusatz der Mineralsalze Calcium-(L+)-lactat, Magnesiumgluconat und Eisen-(II)-gluconat

### Variante III/B (Code-Nummer 4369)

- ohne Zusatz von Feijoa- und Chayotenmark, Ananassaftanteil von 25 % auf 33 % erhöht, alle übrigen Bestandteile unverändert

### Variante III/C (Code-Nummer 9269)

- Feijoamark von 6 auf 4 % reduziert, Ananassaftanteil von 25 auf 27 % erhöht, alle übrigen Bestandteile unverändert

### Variante III/D (Code-Nummer 7206)

- Feijoamark von 6 auf 3 % reduziert
- ohne Zusatz von Chayotenmark, Ananassaftanteil von 25 auf 30 % erhöht

Das Ergebnis der Rangfolgenverkostung mit 8 Verkostern ist in der folgenden Tabelle aufgeführt:

| Code-Nummer | Rangsumme |
|---|---|
| 7546 | 15 |
| 2309 | 16 |
| 4369 | 38 |
| 9269 | 17 |
| 7206 | 34 |

Das Ergebnis zeigte, daß der Gehalt von 6 % Feijomark und 2 % Chayotenmark (Code-Nummer 7546) den Mineralstoffzusatz maskieren konnte. Im Vergleich zur Probe ohne Feijoa- und Chayotenmark und ohne Mineralstoffzusatz (Code-Nummer 2309) wurde kein signifikanter Unterschied festgestellt während der Unterschied zur mineralstoffangereicherten Probe ohne Feijoamark und Chayotenmark (Code-Nr. 4369) signifikant war. Bereits ein Gehalt von 4 % Feijoamark und 2 % Chayotenmark (Code-Nummer 9269) war zur Maskierung ebenfalls ausreichend. Der Gehalt von 3 % Feijoamark war jedoch beim Zusatz der drei Mineralstoffe in den vorgenannten Rezepturen nicht in der Lage, die durch den Mineralstoffzusatz bedingte geschmackliche Beeinträchtigung zu überdecken.

### Beispiel 5:

### Rezeptur IV (Code-Nummer 3911)

Getränke mit 65 % Gemüse- und Fruchtgehalt bestehend aus
20 % Karottensaft
18 % Zitronensaft
9 % Orangensaft
8 % Paprikamark
6 % Moramark (Geruch 8 Punkte, Geschmack 8 Punkte)
4 % Guavenmark (Geruch 8 Punkte, Geschmack 8 Punkte)
2.4 % Milchmineralien (z.B. CAPOLAC)
0,7 % Magnesiumhydroxidcarbonat
0,2 % Kaliumchlorid
0,050 % Vitamin C
0,0018 % Provitamin A
0,0036 % Vitamin E
4 % Traubenzucker
ad 100 % Wasser

### Variante IV/A (Code-Nummer 5693)

- ohne Zusatz der Mineralsalze
- ohne Zusatz von 6 % Mora- und 4 % Guavenmark,
- Orangensaftanteil von 9 auf 19 % erhöht, alle übrigen Bestandteile unverändert

### Variante IV/B (Code-Nummer 2654)

- ohne Zusatz von 6 % Mora- und 4 % Guavenmark,
- Orangensaftanteil von 9 auf 19 % erhöht, alle übrigen Bestandteile unverändert

### Variante IV/C (Code-Nummer 3813)

- ohne Zusatz von 6 % Moramark, Orangensaftanteil von 9 auf 15 % erhöht, alle übrigen Bestandteile unverändert

### Variante IV/D (Code-Nummer 5749)

- ohne Zusatz von 4 % Guavenmark, Orangensaftanteil von 9 auf 13 % erhöht, alle übrigen Bestandteile unverändert

Die Verkostung durch 8 Verkoster im Rangfolgetest gemäß ISO-NORM 8587 war wie folgt:

| Code-Nummer | Rangsumme |
|---|---|
| 3911 | 14 |
| 5693 | 11 |
| 2654 | 37 |
| 3813 | 34 |
| 5749 | 24 |

Der Zusatz von 6 % Moramark und 4 % Guavenmark (Code-Nummer 3911) war geeignet, den durch den Mineralstoffzusatz beeinträchtigten Geschmack dergestalt zu maskieren, daß in der Rangfolge kein signifikanter Unterschied zur Probe ohne Mineralstoffzusatz und ohne Zusatz von Mora- und Guavenmark bestand (Code-Nummer 5693). Auch zur Probe mit einem Zusatz von lediglich 6 % Moramark (Code-Nummer 5749) bestand kein signifikanter Unterschied. Der Unterschied zur mineralstoffangereicherten Probe ohne Zusatz von Mora- und Guavenmark (Code-Nummer 2654) war hingegen signifikant.

## Patentansprüche

1. Mit Mineralstoffen aus der Gruppe Ca, K, Mg, Fe jeweils einzeln oder in Kombination angereichertes Fruchtgetränk oder Frucht-Gemüsegetränk, wobei die in Kombination enthaltenen Mineralstoffe in Konzentrationen von jeweils mindestens 1/3 bis maximal dem fünffachen des jeweiligen Tagesbedarfs pro Liter enthalten sind, bei Vorliegen aber nur eines Vertreters in einer Konzentration pro Liter, die über dem Tagesbedarf an dem jeweils zugesetzten Mineralstoff bis maximal dem dreifachen Tagesbedarf liegt, wobei zur Erzielung eines gleichbleibenden, ausgewogenen Geschmacksprofils für das Fruchtgetränk und zur Maskierung des durch den Mineralstoffzusatz bewirkten negativen Geschmacksempfindens noch ein Fruchtsaft und/oder Fruchtmark von mindestens einem Vertreter tropischer Früchte aus der Gruppe Anacardiaceae, Annonaceae, Myrtaceae, Passifloraceae, Rosaceae und Solanaceae zugesetzt ist, wobei der Zusatz in Kombination und Menge in Abhängigkeit von der jeweiligen Qualität und Aromaintensität der jeweils verwendeten tropischen Früchte sowie von der Art und Höhe des Mineralstoffzusatzes über eine Aromaprofilanalyse nach ISO-Richtlinie 6564 und einem Rangordnungstest nach ISO-Richtlinie 8587 bestimmt wird.

2. Getränk nach Anspruch 1, dadurch gekennzeichnet, daß es als Mineralstoffzusatz mindestens 2 Vertreter aus der Gruppe Ca, K, Mg, Fe enthält.

3. Getränk nach den Ansprüchen 1 und 2, dadurch gekennzeichnet, daß in einem Liter des trinkfertigen Produkts die zugesetzten Mineralstoffe in einer Konzentration von mindestens 2/3 des jeweiligen Tagesbedarfs enthalten sind.

4. Getränk nach einem der Ansprüche 1 bis 3, dadurch gekennzeichnet, daß das trinkfertige Produkt einen Fruchtgehalt von mindestens 5 Gew.-% der jeweils einzeln oder in Kombination eingesetzten tropischen Früchte enthält.

5. Getränk nach Anspruch 4, dadurch gekennzeichnet, daß es außer den zur Geschmacksmaskierung zugesetzten tropischen Früchten einen Fruchtgehalt an anderen Früchten enthält und der Gesamtfruchtgehalt mindestens 20% beträgt.

6. Getränk nach jedem der Ansprüche 1 bis 5, dadurch gekennzeichnet, daß als typische Vertreter für die Familie der Anacardiaceae die Mango (Mangifera indica) und/oder die Balsampflaume (Spondias dulcis) und/oder die Gandaria (Bouea macrophylla), für die Annonaceae die Cherimoya (Annona cherimola) und/oder die Schuppenannone (Annona squamosa) und/oder die Stachelannone (Annona muricata) und/oder die Netzannone (Annona reticulata), für die Myrtaceae die Guayaba und/oder die Coronilla (Psidium friedrichstalanium) und/oder die Feijoa (Acca sellowiana) und/oder die Jaboticaba (Myrciaria cauliflora) und/oder die Jambolanpflaume (Syzygium cumini) und/oder die Surinamkirsche (Eugenia uniflora), für die Passifloraceae die Passionsfrucht (Passiflora edulis Sims,) und/oder die Curuba (Passiflora molissima), für die Rosaceae die Mora und/oder die Boysenbeere und/oder die Loganbeere (Rubus loganobaccus) und/oder die Loquat (Eriobotrya japonica) und/oder die Japanische Pflaume (Prunus salicina) und/oder die Andenbrombeere (Rubus glaucus) und für die Solanaceae die Lulo enthalten sind.

7. Getränk nach jedem der Ansprüche 1 bis 6, dadurch gekennzeichnet, daß es einen Zusatz an Gemüsesaft und/oder Gemüsemark, vorzugsweise von Karotten und/oder Paprika (Capsicum annuum L.) und/oder Gurken (Cucumis sativus L.) und/oder Honigmelonen und/oder Fenchel und/oder Gemüsefenchel (Foeniculum vulgare) und/oder Chayoten (Selchium edule) und/oder Erdmandel (Cyperus esculentus) und/oder Kiwano (Cucumis metuliferus) enthält.

8. Getränk nach jedem der Ansprüche 1 bis 7, dadurch gekennzeichnet, daß es einen Zusatz ernährungsphysiologisch relevanter Mengen, vorzugsweise von mindestens 3, Vitaminen und/oder Provitaminen enthält.

9. Getränk nach jedem der Ansprüche 1 bis 8, dadurch gekennzeichnet, daß es einen Zusatz eines aus natürlichen Quellen gewonnenen Konzentrats an ernährungsphysiologisch relevanten Spurenelementen enthält.

10. Getränk nach jedem der Ansprüche 1 bis 9, dadurch gekennzeichnet, daß es einen Zusatz von 1 bis 15 Gew.-% an Süßungsmitteln enthält.

11. Getränk nach Anspruch 10, dadurch gekennzeichnet, daß es einen Zusatz von 0,001 bis 0,05 Gew.-% an künstlichen Süßstoffen enthält.

## Claims

1. Fruit beverage or fruit-vegetable beverage enriched with minerals from the group Ca, K, Mg, Fe, in each case individually or in combination, wherein the minerals contained in combination are contained in concentrations in each case of at least 1/3 to at most five times the respective daily requirement per litre but, when only one representative is present, in a concentration per litre which is above the daily requirement of the respective added mineral up to at most three times the daily requirement, and, in order to achieve a constant, balanced taste profile for the fruit beverage and to mask the negative perceived taste caused by the mineral additive, a fruit juice and/or fruit pulp is added from at least one representative of tropical fruits from the group Anarcadiaceae, Annonaceae, Myrtaceae, Passifloraceae, Rosaceae and Solanaceae, the additive being determined with respect to its combination and amount in dependence on the respective quality and fragrance intensity of the tropical fruits used and on the type and amount of the mineral additive by means of a fragrance profile analysis in accordance with ISO Standard 6564 and a ranking test in accordance with ISO standard 8587.

2. Beverage as claimed in claim 1, characterised in that it contains at least 2 representatives from the group Ca, K, Mg, Fe as the mineral additive.

3. Beverage as claimed in claims 1 and 2, characterised in that the added minerals in one litre of the ready-to-drink product are contained in a concentration of at least 2/3 of the respective daily requirement.

4. Beverage as claimed in one of Claims 1 to 3, characterised in that the ready-to-drink product contains a fruit content of at least 5 wt.% of the respective tropical fruits used individually or in combination.

5. Beverage as claimed in Claim 4, characterised in that in addition to the tropical fruits added for taste masking purposes, it contains a fruit content of other fruits and the total fruit content is at least 20%.

6. Beverage as claimed in all of Claims 1 to 5, characterised in that the mango (Mangifera indica) and/or the Balsam plum (Spondias dulcis) and/or the Gandaria (Bouea macrophylla) is included as a typical representative of the family Anacardiaceae, the cherimoya (Annona cherimola) and/or the scaly annone (Annona squamosa) and/or the spiny annone (Annona muricata) and/or the net annone (Annona reticulata) is included as a typical representative for the Annonaceae, the guayaba and/or the coronilla (Psidium friedrichstalanium) and/or the feijoa (Acca selloviana) and/or the jaboticaba (Myrciaria cauliflora) and/or the jambolan plum (Syzygium cumini) and/or the surinam cherry (Eugenia uniflora) is included as a typical representative for the Myrtaceae, the passion fruit (Passiflora edulis Sims) and/or the curuba (Passiflora molissima) is included as a typical representative for the Passifloraceae, the mora and/or the boysenberry and/or the loganberry (Rubus loganobaccus) and/or the loquat (Eriobotrya japonica) and/or the Japanese plum (Prunus salicina) and/or the Andes blackberry (Rubus glaucus) is included as a typical representative for the Rosaceae and the lulo is included as a typical representative for the Solanaceae.

7. Beverage as claimed in each of Claims 1 to 6, characterised in that it contains an addition of vegetable juice and/or vegetable pulp, preferably of carrots and/or peppers (Capsicum annuum L.) and/or cucumbers (Cucumis sativus L.) and/or honeydew melons and/or fennel and/or vegetable fennel (Foeniculum vulgare) and/or chayotes (Selchium edule) and/or earth almonds (Cyperus esculentus) and/or kiwano (Cucumis metuliferus).

8. Beverage as claimed in each of Claims 1 to 7, characterised in that it contains an addition of nutritionally relevant amounts of, preferably at least 3, vitamins and/or provitamins.

9. Beverage as claimed in all of Claims 1 to 8, characterised in that it contains an addition of a concentrate of nutritionally relevant trace elements produced from natural sources.

10. Beverage as claimed in all of Claims 1 to 9, characterised in that it contains an addition of 1 to 15 wt.% of sweetening agents.

11. Beverage as claimed in Claim 10, characterised in that it contains an addition of 0.001 to 0.05 wt.% artificial sweeteners.

## Revendications

1. Jus de fruits ou jus de fruits et de légumes, enrichi par une ou une association de matières minérales du groupe Ca, K, Mg, Fe, où les matières minérales contenues dans l'association sont présentes en une concentration d'au moins 1/3 jusqu'au maximum 5 fois le besoin journalier par litre, en cas de présence de seulement un représentant, en une concentration par litre qui se situe au-dessus du besoin journalier en la matière minérale ajoutée jusqu'au maximum 3 fois le besoin journalier où, pour obtenir un profil de saveur constant, dosé pour le jus de fruits et pour masquer la sensation négative sur la saveur provoquée par l'addition de matières minérales, on ajoute encore un sirop et/ou de la pulpe de fruits d'au moins un représentant de fruits tropicaux choisis dans le groupe des anacardiacées, anonacées, myrtacées, passifloracées, rosacées et solanacées, où on détermine la combinaison et la quantité de l'addition en fonction de la qualité et de l'intensité de l'arôme de chaque fruit tropical utilisé ainsi que du type et de l'importance de l'addition de matières minérales sur une analyse de profit d'arome suivant les directives ISO-6564 et un test d'ordre suivant les directives ISO-8587.

2. Jus suivant la revendication 1, caractérisé en ce qu'il contient au moins 2 représentants du groupe Ca, K, Mg, Fe comme matières minérales.

3. Jus suivant les revendications 1 et 2, caractérisé en ce que, pour un litre de produit fini buvable, les matières minérales ajoutées sont présentes en une concentration d'au moins 2/3 du besoin journalier en celles-ci.

4. Jus suivant l'une quelconque des revendications 1 à 3, caractérisé en ce que le produit fini buvable présente une teneur en fruit d'au moins 5% en poids du ou de chacun de la combinaison de fruits tropicaux introduits.

5. Jus suivant la revendication 4, caractérisé en ce qu'il contient, en plus des fruits tropicaux ajoutés pour masquer la saveur, une teneur en fruit d'autres fruits et la teneur totale en fruit atteint au moins 20%.

6. Jus suivant l'une quelconque des revendications 1 à 5, caractérisé en ce qu'il contient comme représentant typique de la famille des anacardiacées, le manguier (Mangifera indica) et/ou la pomme cythère (Spondias dulcis) et/ou Bouea macrophylla, pour les anonacées, le chérimolier (Annona cherimola) et/ou le grand corossolier (Annona squamosa) et/ou l'anone muriquée (Annona muricata) et/ou l'anone réticulée (Annona reticulata), pour les myrtacées, le goyavier et/ou le goyavier à feuilles de laurier (Psidium friedrichsthalianium) et/ou le feijoa (Acca sellowiana) et/ou le myricaire (Myricaria cauliflora) et/ou le jamélonier (Syzygium cumini) et/ou le cerisier carré (Eugenia uniflora), pour les passifloracées, le passiflore comestible (Passiflora edulis Sims) et/ou le Passiflora molissima, pour les rosacées, la morée et/ou la framboise et/ou la ronce-framboise (Rubus loganobaccus) et/ou le néflier du Japon (Eriobotyra japonica) et/ou le prunier japonais (Prunus salicina) et/ou le Rubus glaucus et pour les solanacées, le lulo.

7. Jus suivant l'une quelconque des revendications 1 à 6, caractérisé en ce qu'il contient un additif de sirop de légumes ou de pulpe de légumes, de préférence, de carotte et/ou de poivre d'Inde (Capsicum annuum L.) et/ou de concombre commun (Cucumis sativus L.) et/ou de melon et/ou de fenouil et/ou de fenouil amer (Foeniculum vulgare) et/ou de chayote comestible (Sechium edule) et/ou l'amande de terre (Cyperus esculentus) et/ou de concombre métulifère (Cucumis metuliferus).

8. Jus suivant l'une quelconque des revendications 1 à 7, caractérisé en ce qu'il contient, en outre, des vitamines et/ou des provitamines, de préférence au moins 3, en quantité importante d'un point de vue physiologique et diététique.

9. Jus suivant l'une quelconque des revendications 1 à 8, caractérisé en ce qu'il contient, en outre, un concentré extrait de sources naturelles d'oligoéléments importants d'un point de vue physiologique et diététique.

10. Jus suivant l'une quelconque des revendications 1 à 9, caractérisé en ce qu'il contient, en outre, de 1 à 15% en poids d'édulcorants.

11. Jus suivant la revendication 10, caractérisé en ce qu'il contient de 0,001 à 0,05% en poids d'édulcorants artificiels.
